# EUROPÄISCHE PATENTSCHRIFT

(11) **EP 2 473 316 B1**
(45) Veröffentlichungstag und Bekanntmachung des Hinweises auf die Patenterteilung: **06.04.2016**
(21) Anmeldenummer: 10778835.8
(22) Anmeldetag: 03.09.2010
(51) Int. Cl.: B23K 26/06, B23K 26/08, B23K 37/02

(54) **LASERBEARBEITUNGSMASCHINE MIT REDUNDANTEN ACHSEN**
LASER PROCESSING MACHINE WITH REDUNDANT AXES
MACHINE D'USINAGE LASER A AXES REDONDANTS

(30) Priorität: 04.09.2009 DE 102009029193
(43) Veröffentlichungstag der Anmeldung: 11.07.2012
(73) Patentinhaber: TRUMPF Werkzeugmaschinen GmbH & Co. KG, 71254 Ditzingen (DE)
(72) Erfinder: BRAUN, Jens, 70184 Stuttgart (DE); RUPP, Thomas, 71636 Ludwigsburg (DE); VEES, Dominik, 72072 Tübingen (DE)
(74) Vertreter: Kohler Schmid Möbus Patentanwälte
(86) Internationale Anmeldenummer: PCT/DE2010/050066
(87) Internationale Veröffentlichungsnummer: WO 2011/026486

(56) Entgegenhaltungen:
- EP-A2- 0 187 934
- DE-A1- 19 955 520
- US-A- 3 742 182
- US-A- 5 660 748
- US-A1- 2001 008 231
- US-A1- 2002 079 299
- US-A1- 2007 217 900

## Beschreibung

Die vorliegende Erfindung betrifft eine Laserbearbeitungsmaschine zur Bearbeitung von Werkstücken mittels eines Laserstrahls gemäß Oberbegriff von Anspruch 1 oder Anspruch 2.

Eine derartige Laserbearbeitungsmaschine ist beispielsweise jeweils durch die US 5 660 748 A bekannt geworden.

Bei der Lasermaterialbearbeitung von Werkstücken sind hohe Bearbeitungsgeschwindigkeiten angestrebt. Bei bekannten Laserbearbeitungsmaschinen werden die Laserbearbeitungsköpfe über bestimmte Antriebe oder auch mittels Robotern bewegt, um bestimmte Bearbeitungsgeometrien ausbilden zu können. Bei hohen Bearbeitungsgeschwindigkeiten treten in Bereichen, in denen starke Richtungswechsel erforderlich sind, erhebliche Beschleunigungen auf, so dass es bisher erforderlich ist, in solchen Bearbeitungsbereichen die Geschwindigkeit, mit der der Laserbearbeitungskopf bewegt wird, deutlich zu reduzieren, was sich wiederum nachteilig auf die gewünschte hohe Bearbeitungsgeschwindigkeit auswirkt.

Aus der eingangs genannten US 5 660 748 A ist eine Laserbearbeitungsmaschine mit einem in Y-Richtung motorisch verfahrbaren, zweiteiligen Y-Schlitten bekannt, an dem ein X-Schlitten in X-Richtung motorisch verfahrbar geführt ist. An dem X-Schlitten ist wiederum eine Strahlausgabe-Optikanordnung in Z-Richtung motorisch verfahrbar geführt.

Aus der DE 199 55 520 A1 ist ein Bearbeitungskopf zur Bearbeitung von Freiformflächen bekannt. Der Bearbeitungskopf umfasst eine Grundplatte, die an eine Schnittstelle einer Werkzeugmaschine anschließbar ist, einen Träger für eine Bearbeitungsvorrichtung und drei längenverstellbare Streben, die mit endseitigen Gelenken an den Träger und an die Grundplatte angeschlossen sind. Der Träger ist durch ein Kugel- oder Kardangelenk beweglich mit der Grundplatte verbunden. Die Streben weisen NC-gesteuerte Aktoren auf, so dass durch programmgesteuerte Stellbewegungen der Aktoren Schwenkbewegungen des Trägers um das Kugel-oder Kardangelenk ausführbar sind. Der Bearbeitungskopf ist an der Werkzeugmaschine in X-, Y- und Z-Richtung verfahrbar geführt, und der Bearbeitungskopf kann über die Schwenkbewegungen so ausgerichtet werden, dass sein Werkzeug in jedem Bahnpunkt optimal zu der zu bearbeitenden Oberfläche steht.

US 3 742 182 A offenbart verschiedene Varianten zum Bohren von Löchern mittels eines Laserstrahls, der über ein Werkstück gescannt wird. In einer ersten Variante ist das Werkstück ortsfest, und der Laserstrahl wird über das Werkstück bewegt. In einer zweiten Variante werden das Werkstück und der Laserstrahl in zueinander rechtwinkligen Richtungen bewegt. In einer dritten Variante wird das Werkstück gegenüber dem stationär bleibendem Laserstrahl bewegt.

Aus der US 2002/079299 A1 ist ein Laserstrahlprojektor zur Verwendung in einer automatischen Schweißmaschine bekannt. Der Laserstrahlprojektor umfasst einen optischen Kopf zum Projizieren des Laserstrahls und einen Halte- und Drehmechanismus zum Halten und Drehen des Projektorkopfs. Der Laserfleck des Laserstrahls kann exakt auf dem zu schweißenden Werkstückabschnitt positioniert werden, indem der optische Kopf mittels des Halte- und Drehmechanismus gedreht wird.

Aus US 2007/217900 A1 ist schließlich ein Roboter mit zwei Bewegungseinheiten bekannt, die linear und zueinander parallel verfahrbar und individuell ansteuerbar sind. Die beiden Bewegungseinheiten sind über Gelenkarme mit einem Werkstückhalter verbunden, der seinerseits eine Spannvorrichtung aufweist und in einer Horizontalebene und in einer Vertikaltalebene bewegt werden kann.

Demgegenüber ist es die Aufgabe der vorliegenden Erfindung, bei einer Laserbearbeitungsmaschine der eingangs genannten Art die Bearbeitungsgeschwindigkeit und damit die Maschinenperformance zu steigern.

Diese Aufgabe wird erfindungsgemäß durch eine Laserbearbeitungsmaschine mit den Merkmalen von Anspruch 1 oder Anspruch 2 gelöst.

Die Erfindung stellt ein redundantes Achssystem bereit, das durch dynamische Zusatzantriebe der Bearbeitungseinheit eine deutliche Performance-Steigerung des Gesamtsystems ermöglicht. Wesentliche Bestandteile sind die drehbare bzw. schwenkbare Lagerung der optischen Bearbeitungseinheit um einen definierten Drehpunkt bzw. um eine Dreh- oder Schwenkachse und zumindest ein hochdynamischer Antrieb, welcher die optische Bearbeitungseinheit um zumindest einen definierten Winkel auslenkt. Die Erfindung kommt, da nur die optische Bearbeitungseinheit und nicht auch die Verfahreinheit bewegt werden muss, und aufgrund der pendelartigen Auslenkung der optischen Bearbeitungseinheit mit kleinen Kräften aus. Die dynamischen Werte (Beschleunigung, Ruck, Geschwindigkeit) der Zusatzantriebe, d.h. in der bzw. den Zusatzachse, sind deutlich größer als die in der bzw. den Hauptachsen, bevorzugt mind. 2 - 3 Mal so groß. Da außerdem die gesamte optische Bearbeitungseinheit ausgelenkt wird, wird eine

Änderung der optischen Wegverhältnisse innerhalb der Bearbeitungseinheit vermieden. Durch das Verschwenken ändert sich aber die Abbildung auf der Werkstückoberfläche durch die Verlagerung des Fokus. Je nach Akzeptanzbereich kann hier eine Nachregelung über die Hauptachsen oder aber durch eine Fokuslagenverstellung über eine Abbildungsoptik erfolgen. Die Variante, wonach der bzw. die Antriebe für die Zusatzachse bzw. -achsen an der Verfahreinheit vorgesehen sind, hat den Vorteil, dass diese Antriebe bei einer Bewegung der Bearbeitungseinheit in Z-Richtung nicht mitbewegt werden. So kann insbesondere bei Flachbettmaschinen die kritische bewegte Masse in Z-Richtung reduziert werden.

Bei einer besonders bevorzugten Ausführungsform der erfindungsgemäßen Laserbearbeitungsmaschine ist vorgesehen, dass der Laserstrahl als divergenter Strahl in die Bearbeitungseinheit eingekoppelt ist und die Bearbeitungseinheit eine Abbildungsoptik, insbesondere eine Teleskopanordnung, aufweist, die den eingekoppelten Laserstrahl auf das zu bearbeitende Werkstück abbildet und insbesondere auch fokussiert. Über die Abbildungsoptik kann eine Nachstellung der Fokuslage erfolgen, bspw. über Vorrichtungen zum Verfahren/Verschieben einzelner optischer Komponenten.

In einer besonders vorteilhaften Weiterbildung dieser Ausführungsform ist der Laserstrahl über ein einenends an der Bearbeitungseinheit befestigtes Lichtleiterkabel in die Bearbeitungseinheit eingekoppelt und verläuft daher unabhängig von der jeweiligen Auslenkung der Bearbeitungseinheit stets entlang der optischen Achse der Bearbeitungseinheit. Zudem bleiben die Komponenten und somit die Abbildungsverhältnisse in der Bearbeitungseinheit somit konstant.

Vorzugsweise - aber nicht ausschließlich - wird die Laserstrahlung zur Laserbearbeitung durch einen Festkörperlaser, wie bspw. einen Stab-, Scheiben- oder Faserlaser, oder auch einen Diodenlaser zur Verfügung gestellt. Diese eignen sich insbesondere für die Führung der Laserstrahlung über ein Lichtleiterkabel.

Vorzugsweise ist an der Verfahreinheit oder an der Bearbeitungseinheit ein Antrieb zum Verschieben der gesamten Bearbeitungseinheit gegenüber der Verfahreinheit in Richtung des aus der Bearbeitungseinheit austretenden Laserstrahls vorgesehen, um so die gesamte Bearbeitungseinheit in der Z-Achse bewegen und dadurch den Abstand zwischen Düse und Werkstück einstellen zu können.

Zum Verfahren der Bearbeitungseinheit in kartesischen Koordinaten sind zwei hochdynamische Linearantriebe vorgesehen, deren translatorische Antriebsrichtungen zueinander orthogonal verlaufen und eine Ebene aufspannen, die annähernd parallel zur Werkstückauflage, aber auch schräg dazu sein kann. Zum Verfahren der Bearbeitungseinheit in Polarkoordinaten sind ein hochdynamischer Linearantrieb zur Radialauslenkung und ein hochdynamischer Drehantrieb zur Winkelauslenkung vorgesehen, so dass der translatorischen Radialbewegung des Linearantriebs eine rotatorische Bewegung des Drehantriebs überlagert werden kann. Die Steuerung kann in diesem Zusammenhang eine Einheit vorsehen, die je nach Bearbeitungsbahn und -strategie entscheidet, ob in kartesischen Koordinaten oder in Polarkoordinaten verfahren wird.

Die Erfindung betrifft in einem weiteren Aspekt auch ein Verfahren zur Laserbearbeitung von Werkstücken mittels der wie oben ausgebildeten Laserbearbeitungsmaschine mit den Merkmalen von Anspruch 12.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Es zeigt:
- Fig. 1: ein erstes Ausführungsbeispiel der erfindungsgemäßen Laserbearbeitungsmaschine mit einer relativ zur Werkstückauflage in den Hauptachsen verfahrbaren Laserbearbeitungseinheit; und
- Fig. 2: ein zweites Ausführungsbeispiel der erfindungsgemäßen Laserbearbeitungsmaschine mit einer relativ zur Laserbearbeitungseinheit in den Hauptachsen verfahrbaren Werkstückauflage.

In der Zeichnung sind einander entsprechende Bauteile der beiden Ausführungsbeispiele zweckmäßiger Weise mit gleichen Bezugszeichen versehen.

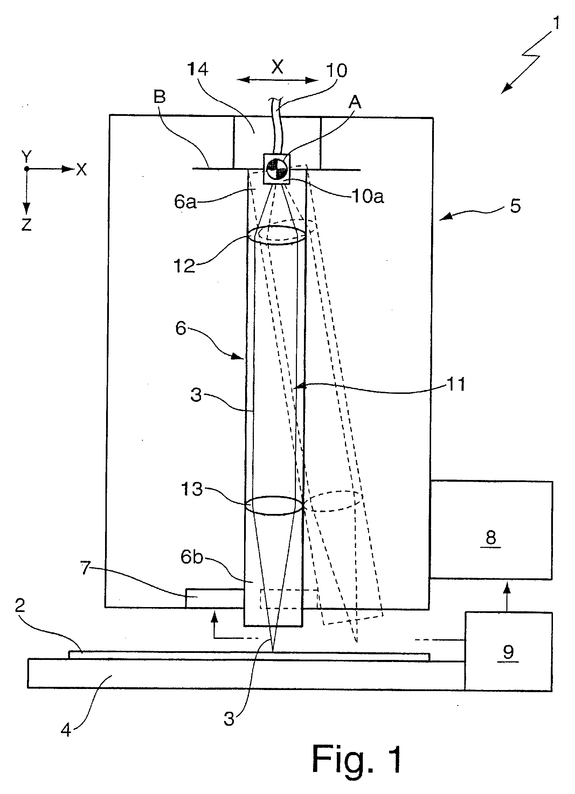

**Fig. 1** zeigt schematisch eine Seitenansicht der erfindungsgemäßen Laserbearbeitungsmaschine **1** zum Laserschweißen oder Laserschneiden von Werkstücken **2** mittels eines Laserstrahls **3**.

Die Laserbearbeitungsmaschine 1 umfasst eine horizontale Werkstückauflage (z.B. ein Flachbett) **4** für zu bearbeitende Werkstücke 2, eine entlang zweier zueinander orthogonaler horizontaler Hauptachsen **X**, **Y** über die gesamte Werkstückauflage 4 verfahrbare Verfahreinheit **5** (z.B. ein XY-Schlitteneinheit), sowie eine an der Verfahreinheit 5 vorgesehene optische Bearbeitungseinheit **6**, die mit der Verfahreinheit 5 mitverfährt und den vertikal austretenden Laserstrahl 3 auf das zu bearbeitende Werkstück 2 fokussiert.

An ihrem bezüglich der Werkstückauflage 4 oberen Ende **6a** ist die Bearbeitungseinheit 6, z.B. über ein Kardangelenk oder eine Kugel-Pfanne-Aufnahme (nicht gezeigt), schwenkbar an der Verfahreinheit 5 um zwei zueinander orthogonale Zusatzachsen **A**, **B** hängend gelagert, welche hier jeweils parallel zu den Hauptachsen X, Y verlaufen. An der Verfahreinheit 5 oder an der Bearbeitungseinheit 6 sind zwei in X- bzw. Y-Richtung verstellbare hochdynamische Linearantriebe **7** vorgesehen, von denen in der Zeichnung nur der X-Linearantrieb gezeigt ist. Die beiden Linearantriebe 7 greifen an dem bezüglich der Werkstückauflage 4 unteren Ende **6b** der Bearbeitungseinheit 6 an und können so, wie gestrichelt angedeutet, die Bearbeitungseinheit 6 unabhängig voneinander um die beiden Zusatzachsen A, B, also zweidimensional auslenken.

Der XY-Antrieb **8** zum Verfahren der Verfahreinheit 5 und die beiden Linearantriebe 7 werden von einer Steuerung **9** angesteuert, die eine gewünschte Bahnkurve des Laserstrahls 4 auf dem Werkstück 2 in eine Bewegung der Verfahreinheit 5 entlang der Hauptachsen X, Y und in eine Auslenkung der Bearbeitungseinheit 6 um die Zusatzachsen A, B aufteilt und den XY-Antrieb 8 und die zwei Linearantriebe 7 entsprechend ansteuert.

Der Laserstrahl 3 eines Lasers (nicht gezeigt) ist über ein in die Bearbeitungseinheit 6 eingestecktes Lichtleiterkabel (Glasfaser) **10** als divergenter Strahl in die Bearbeitungseinheit 6 eingekoppelt. Die Bearbeitungseinheit 6 weist dazu an ihrem oberen Ende 6a eine Steckeraufnahme auf, in die der Faserstecker **10a** des Laserlichtkabels 10 eingesteckt ist und darin zusätzlich drehbar gelagert sein kann. Der eingekoppelte Laserstrahl 3 wird durch eine hier als Linsenteleskopanordnung ausgebildete Abbildungsoptik **11** auf das zu bearbeitende Werkstück 2 abgebildet und fokussiert. Die Abbildungsoptik 11 besteht aus einem Linsensystem, bestehend aus einer in Strahlausbreitungsrichtung verfahrbaren Kollimationslinse **12**, die den aus dem Lichtleiterkabel 10 emittierten Laserstrahl 3 kollimiert und zusätzlich dazu dient, durch Verfahren in Strahlausbreitungsrichtung die Fokuslage auf dem Werkstück zu variieren, und aus einer Fokussierlinse **13**, die den Laserstrahl 3 auf das Werkstück 2 fokussiert.

An der Verfahreinheit 5 ist weiterhin noch ein motorischer Vertikalantrieb **14** zum vertikalen Verschieben der gesamten Bearbeitungseinheit 6 samt Lichtleiterkabel 10 und Abbildungsoptik 11 gegenüber der Verfahreinheit 5 vorgesehen, um so die gesamten Bearbeitungseinheit 6 senkrecht zum Werkstück 2 also in der vertikalen Z-Achse, zu bewegen und dadurch den Abstand zwischen Bearbeitungseinheit 6 und Werkstück 2 sowie ggf. die Fokuslage auf dem Werkstück 2 einstellen zu können.

Die gesamte Bearbeitungseinheit 6 mit Lichtleiterkabel 10 und Abbildungsoptik 11 ist an der Verfahreinheit 5 hängend befestigt und um die beiden Zusatzachsen A, B drehbar gelagert. Die beiden hochdynamischen Linearantriebe 7 dienen dazu, die gesamte Bearbeitungseinheit 6 um einen variablen, definierten Winkel in X- oder Y-Richtung auszulenken. Wenn die maximale Auslenkung in X- oder Y-Richtung klein ist gegenüber dem Abstand des Werkstückes 2 von den Zusatzachsen A, B, sind die daraus resultierenden Einflüsse auf den Schneidprozess klein. So beträgt z.B. für eine max. Auslenkung von +/- 20 mm in X- oder Y-Richtung und einer Gesamtlänge des Systems von 600 mm der max. Auslenkwinkel der Bearbeitungseinheit 6 nur 1,9°, was einer Änderung des Abstandes der Bearbeitungseinheit 6 zum Werkstück 3 von nur 0,3 mm nach sich zieht. Da die gesamte optische Bearbeitungseinheit 6 verschwenkt wird, wird eine Änderung der optischen Wegverhältnisse innerhalb der Bearbeitungseinheit 6 vermieden. Durch das Verschwenken ändert sich die Abbildung auf der Werkstückoberfläche durch die Verlagerung des Fokus. Je nach Akzeptanzbereich kann hier eine Nachregelung über die Hauptachsen oder aber durch eine Fokuslagenverstellung über die Abbildungsoptik 11 erfolgen.

Soll eine gewünschte Bahn des Laserstrahls 4 auf dem Werkstück 2 gefahren werden, so teilt die Steuerung 9 diese Bahnkurve in eine Bewegung der Verfahreinheit 5 entlang der Hauptachsen X, Y mit möglichst wenig Richtungsänderungen und in eine Auslenkung der Bearbeitungseinheit 6 um die Zusatzachsen A, B auf und steuert die Antriebe 7, 8 der Verfahreinheit 5 und der Antriebe 7 entsprechend an.

Anstatt wie gezeigt in zwei Hauptachsen kann die Verfahreinheit 5 auch nur in eine einzige Hauptachse verfahrbar sein. Anstatt wie gezeigt um zwei Zusatzachsen kann die Bearbeitungseinheit 6 auch nur um eine einzige Zusatzachse verschenkbar gelagert sein.

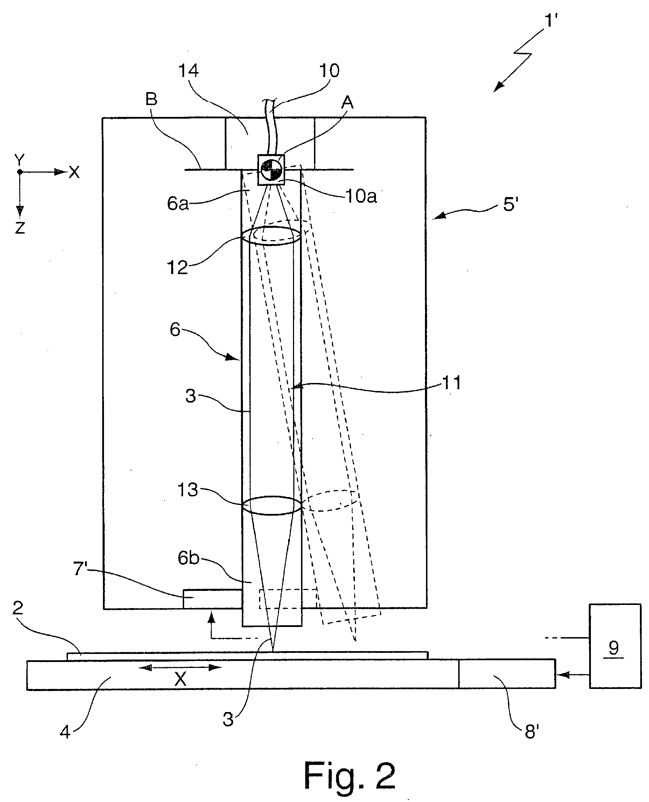

Von der Laserbearbeitungsmaschine 1 unterscheidet sich die in **Fig. 2** gezeigte Laserbearbeitungsmaschine **1'** dadurch, dass hier die Werkstückauflage 4 entlang der beiden Hauptachsen X, Y mittels eines Antriebs **8'** relativ zur optischen Bearbeitungseinheit 6 verfahrbar ist, dass die Bearbeitungseinheit 6 an ihrem oberen Ende 6a schwenkbar an einer Halteeinheit **5'** um die beiden Zusatzachsen A, B gelagert ist und dass die Antriebe **7'** zum Auslenken des unteren Endes 6b der Bearbeitungseinheit 6 um die jeweilige Zusatzachse A, B an der Halteeinheit 5' oder an der Bearbeitungseinheit 6 vorgesehen sind. Die Steuerung 9 teilt eine gewünschte Bahn des Laserstrahls 4 auf dem Werkstück 2 in eine Bewegung der Werkstückauflage 4 entlang der zwei Hauptachsen X, Y und in eine Auslenkung der Bearbeitungseinheit 6 um die zwei Zusatzachsen A, B auf und steuert die Antriebe 7', 8' entsprechend an.

## Patentansprüche

1. Laserbearbeitungsmaschine (1) zur Bearbeitung von Werkstücken (2) mittels eines Laserstrahls (3), umfassend:
eine Werkstückauflage (4) für zu bearbeitende Werkstücke (2),
eine entlang zweier Hauptachsen (X, Y) relativ zur Werkstückauflage (4) mittels eines Hauptantriebs (8) verfahrbare Verfahreinheit (5),
eine den Laserstrahl (3) auf das zu bearbeitende Werkstück (2) fokussierende optische Bearbeitungseinheit (6), und
eine Steuerung (9) zum Ansteuern der Haupt- und Zusatzantriebe (7, 8),
**dadurch gekennzeichnet,**
**dass** die Bearbeitungseinheit (6) an ihrem bezüglich der Werkstückauflage (4) einen Ende (6a) schwenkbar an der Verfahreinheit (5) um zwei Zusatzachsen (A, B) gelagert ist, die parallel zur Ebene der zwei Hauptachsen (X, Y) und jeweils parallel zu den Hauptachsen (X, Y) verlaufen,
**dass** an der Verfahreinheit (5) oder an der Bearbeitungseinheit (6) Zusatzantriebe (7) zum Auslenken des bezüglich der Werkstückauflage (4) anderen Endes (6b) der Bearbeitungseinheit (6) um die jeweilige Zusatzachse (A, B) vorgesehen sind, und
**dass** die Steuerung (9) ausgebildet ist, eine entlang der zwei Hauptachsen (X, Y) gewünschte Bahn des Laserstrahls (3) auf dem Werkstück (2) in eine Bewegung der Verfahreinheit (5) entlang der zwei Hauptachsen (X, Y) und in eine Auslenkung der Bearbeitungseinheit (6) um die zwei Zusatzachsen (A, B) aufzuteilen und die Haupt- und Zusatzantriebe (7, 8) entsprechend anzusteuern.

2. Laserbearbeitungsmaschine (1') zur Bearbeitung von Werkstücken (2) mittels eines Laserstrahls (3), umfassend:
eine optische Bearbeitungseinheit (6), die den Laserstrahl (3) auf das zu bearbeitende Werkstück (2) fokussiert, und
eine Werkstückauflage (4) für zu bearbeitende Werkstücke (2),
**dadurch gekennzeichnet,**
**dass** die Werkstückauflage (4) entlang zweier Hauptachsen (X, Y) relativ zur Bearbeitungseinheit (6) mittels eines Hauptantriebs (8') verfahrbar ist,
**dass** die Bearbeitungseinheit (6) an ihrem bezüglich der Werkstückauflage (4) einen Ende (6a) schwenkbar an einer Halteeinheit (5') um zwei Zusatzachsen (A, B) gelagert ist, die parallel zur Ebene der zwei Hauptachsen (X, Y) und jeweils parallel zu den Hauptachsen (X, Y) verlaufen,
**dass** für jede Zusatzachse (A, B) an der Halteeinheit (5') oder an der Bearbeitungseinheit (6) jeweils ein Zusatzantrieb (7') zum Auslenken des bezüglich der Werkstückauffage (4) anderen Endes (6b) der Bearbeitungseinheit (6) um die jeweilige Zusatzachse (A, B) vorgesehen ist, und
**dass** eine Steuerung (9) vorgesehen ist, die eine entlang der zwei Hauptachsen (X, Y) gewünschte Bahn des Laserstrahls (3) auf dem Werkstück (2) in eine Bewegung der Werkstückauflage (4) entlang der zwei Hauptachsen (X, Y) und in eine Auslenkung der Bearbeitungseinheit (6) um die zwei Zusatzachsen (A, B) aufteilt und die Haupt- und Zusatzantriebe (7', 8') entsprechend ansteuert.

3. Laserbearbeitungsmaschine nach einem der vorhergehenden Ansprüche, **dadurch gekennzeichnet, dass** die zwei Zusatzantriebe (7, 7') der Bearbeitungseinheit (6) als Linearantriebe zum Auslenken in kartesische Koordinaten oder als ein Linearantrieb und ein Drehantrieb zum Auslenken in Polarkoordinaten ausgebildet sind.

4. Laserbearbeitungsmaschine nach einem der vorhergehenden Ansprüche, **dadurch gekennzeichnet, dass** der Laserstrahl (3) als divergenter Strahl in die Bearbeitungseinheit (6) eingekoppelt ist und die Bearbeitungseinheit (6) eine Abbildungsoptik (10), insbesondere eine Teleskopanordnung, aufweist, die den eingekoppelten Laserstrahl (3) auf das zu bearbeitende Werkstück (2) abbildet und insbesondere auch fokussiert.

5. Laserbearbeitungsmaschine nach einem der vorhergehenden Ansprüche, **dadurch gekennzeichnet, dass** der Laserstrahl (3) über ein einenends an der Bearbeitungseinheit (6) befestigtes Lichtleiterkabel (10) in die Bearbeitungseinheit (6) eingekoppelt ist.

6. Laserbearbeitungsmaschine nach einem der vorhergehenden Ansprüche, **dadurch gekennzeichnet, dass** an der Verfahreinheit (5) oder an der Halteeinrichtung (5') ein Antrieb (7') zum Verschieben der gesamten Bearbeitungseinheit (6) gegenüber der Verfahreinheit (5) bzw. der Halteeinrichtung (5') in Richtung des aus der Bearbeitungseinheit (6) austretenden Laserstrahls (3) vorgesehen ist.

7. Laserbearbeitungsmaschine nach einem der vorhergehenden Ansprüche, **dadurch gekennzeichnet, dass** der Laserstrahl (3) über ein in die Bearbeitungseinheit (6) eingestecktes Lichtleiterkabel (10) als divergenter Strahl in die Bearbeitungseinheit (6) eingekoppelt ist.

8. Laserbearbeitungsmaschine nach Anspruch 7, **dadurch gekennzeichnet, dass** die Bearbeitungseinheit (6) an ihrem oberen Ende (6a) eine Steckeraufnahme aufweist, in die ein Faserstecker (10a) des Laserlichtkabels (10) eingesteckt ist.

9. Laserbearbeitungsmaschine nach Anspruch 7 oder 8, **dadurch gekennzeichnet, dass** die Bearbeitungseinheit (6) eine Abbildungsoptik (11) aufweist, die den eingekoppelten Laserstrahl (3) auf das zu bearbeitende Werkstück (2) abbildet und fokussiert.

10. Laserbearbeitungsmaschine nach Anspruch 9, **dadurch gekennzeichnet, dass** die Abbildungsoptik (11) aus einem Linsensystem mit einer in Strahlausbreitungsrichtung verfahrbaren Kollimationslinse (12), die den aus dem Lichtleiterkabel (10) emittierten Laserstrahl (3) kollimiert, und aus einer Fokussierlinse (13) besteht, die den Laserstrahl (3) auf das Werkstück (2) fokussiert.

11. Laserbearbeitungsmaschine nach Anspruch 10, **dadurch gekennzeichnet, dass** durch Verfahren der Kollimationslinse (12) in Strahlausbreitungsrichtung die Fokuslage des Laserstrahls (3) auf dem Werkstück variierbar ist.

12. Verfahren zur Laserbearbeitung von Werkstücken (2) mittels der Laserbearbeitungsmaschine (1) nach einem der vorhergehenden Ansprüche, wobei eine entlang der zwei Hauptachsen (X, Y) gewünschte Bahn des Laserstrahls (3) auf dem Werkstück (2) in eine Bewegung der Verfahreinheit (5) bzw. der Werkstückauflage (4) entlang der zwei Hauptachsen (X, Y) und in eine Auslenkung der Bearbeitungseinheit (6) um die zwei Zusatzachsen (A, B) aufgeteilt wird und die Haupt- und Zusatzantriebe (7, 8; 7', 8') entsprechend angesteuert werden.

## Claims

1. Laser processing machine (1) for processing workpieces (2) by means of a laser beam (3), comprising:
a workpiece support (4) for workpieces (2) to be processed,
a moving unit (5) which can be moved along two main axes (X, Y) relative to the workpiece support (4) by means of a main drive (8),
an optical processing unit (6) which focuses the laser beam (3) onto the workpiece (2) to be processed, and
a control (9) for controlling the main drive and additional drive (7, 8),
**characterized in that**
the processing unit (6) is mounted pivotably at its one end (6a) with respect to the workpiece support (4) on the moving unit (5) about two additional axes (A, B) which extend parallel to the plane of the two main axes (X, Y) and parallel to the main axes (X, Y) in each case,
additional drives (7) for deflecting the other end (6b) of the processing unit (6) with respect to the workpiece support (4) about the respective additional axis (A, B) are provided on the moving unit (5) or on the processing unit (6), and
the control (9) is designed to divide a desired path of the laser beam (3) along the two main axes (X, Y) on the workpiece (2) into a movement of the moving unit (5) along the two main axes (X, Y) and into a deflection of the moving unit (6) about the two additional axes (A, B) and correspondingly control the main drive and additional drive (7, 8).

2. Laser processing machine (1') for processing workpieces (2) by means of a laser beam (3), comprising:
an optical processing unit (6) which focuses the laser beam (3) onto the workpiece (2) to be processed, and
a workpiece support (4) for workpieces (2) to be processed,
**characterized in that**
the workpiece support (4) can be moved along two main axes (X, Y) relative to the processing unit (6) by means of a main drive (8'),
the processing unit (6) is mounted pivotably at its one end (6a) with respect to the workpiece support (4) on a holding unit (5') about two additional axes (A, B) which extend parallel to the plane of the two main axes (X, Y) and parallel to the main axes (X, Y) in each case
one additional drive (7') for deflecting the other end (6b) of the processing unit (6) with respect to the workpiece support (4) about the respective additional axis (A, B) is provided for each additional axis (A,B) on the holding unit (5') or on the processing unit (6), and
a control (9) is provided which divides a desired path of the laser beam (3) along the two main axes (X, Y) on the workpiece (2) into a movement of the workpiece support (4) along the two main axes (X, Y) and into a deflection of the processing unit (6) about the two additional axes (A, B) and correspondingly controls the main and additional drives (7', 8').

3. Laser processing machine according to any one of the preceding claims, **characterized in that** the two additional drives (7, 7') of the processing unit (6) are designed as linear drives for deflection into Cartesian coordinates or as a linear drive and a rotary drive for deflection into polar coordinates.

4. Laser processing machine according to any one of the preceding claims, **characterized in that** the laser beam (3) is coupled into the processing unit (6) as a divergent beam and the processing unit (6) has an imaging optics (10), in particular a telescopic configuration, which images and, in particular, also focuses the coupled-in laser beam (3) onto the workpiece (2) to be processed.

5. Laser processing machine according to any one of the preceding claims, **characterized in that** the laser beam (3) is coupled into the processing unit (6) via an optical fiber cable (10) which is fixed at one end to the processing unit (6).

6. Laser processing machine according to any one of the preceding claims, **characterized in that** a drive (7') is provided on the moving unit (5) or on the holding unit (5') for moving the overall processing unit (6) relative to the moving unit (5) or the holding unit (5') in the direction of the laser beam (3) which emerges from the processing unit (6).

7. Laser processing machine according to any one of the preceding claims, **characterized in that** the laser beam (3) is coupled into the processing unit (6) as a divergent beam via an optical fiber cable (10) which is inserted into the processing unit (6).

8. Laser processing machine according to claim 7, **characterized in that** the processing unit (6) has a socket at its upper end (6a) into which a fiber plug (10a) of the optical fiber cable (10) is inserted.

9. Laser processing machine according to claim 7 or 8, **characterized in that** the processing unit (6) has an imaging optics (11) which images and focuses the coupled-in laser beam (3) onto the workpiece (2) to be processed.

10. Laser processing machine according to claim 9, **characterized in that** the imaging optics (11) consists of a lens system comprising a collimating lens (12) which can be moved in the beam propagation direction and collimates the laser beam (3) emitted from the optical fiber cable (10), and of a focusing lens (13) which focuses the laser beam (3) onto the workpiece (2).

11. Laser processing machine according to claim 10, **characterized in that** the focal position of the laser beam (3) on the workpiece can be varied by moving the collimating lens (12) in the beam propagation direction.

12. Laser processing method of workpieces (2) by means of the laser processing machine (1) according to any one of the preceding claims, wherein a desired path of the laser beam (3) along the two main axes (X, Y) on the workpiece (2) is divided into a movement of the moving unit (5) or the workpiece support (4) along the two main axes (X, Y) and into a deflection of the processing unit (6) about the two additional axes (A, B) and the main and additional drives (7, 8; 7',8') are correspondingly controlled.

## Revendications

1. Machine d'usinage au laser (1) pour l'usinage de pièces (2) au moyen d'un faisceau laser (3), comprenant :
un support de pièce (4) pour les pièces à usiner (2),
une unité de déplacement (5) pouvant être déplacée le long de deux axes principaux (X, Y) par rapport au support de pièce (4) au moyen d'un entraînement principal (8),
une unité optique d'usinage (6) qui focalise le faisceau laser (3) sur la pièce (2) à usiner, et
une commande (9) pour commander les entraînements principaux et supplémentaires (7, 8),
**caractérisée en ce**
**qu'**à son extrémité (6a) par rapport au support de pièce (4), l'unité d'usinage (6) est montée pivotante sur l'unité de déplacement (5) autour de deux axes supplémentaires (A, B) qui sont parallèles au plan des deux axes principaux (X, Y) et respectivement parallèles aux axes principaux (X, Y),
**que** des entraînements supplémentaires (7) pour dévier l'autre extrémité (6b) de l'unité d'usinage (6) par rapport au support de pièce (4) autour de l'axe supplémentaire respectif (A, B) sont prévus sur l'unité de déplacement (5) ou sur l'unité d'usinage (6), et
**que** la commande (9) est conçue pour diviser une trajectoire souhaitée du faisceau laser (3) sur la pièce (2) le long des deux axes principaux (X, Y) en un déplacement de l'unité de déplacement (5) le long des deux axes principaux (X, Y) et en une déviation de l'unité d'usinage (6) autour des deux axes supplémentaires (A, B) et pour commander de manière correspondante les entraînements principaux et supplémentaires (7, 8).

2. Machine d'usinage au laser (1') pour l'usinage de pièces (2) au moyen d'un faisceau laser (3), comprenant :
une unité optique d'usinage (6) qui focalise le faisceau laser (3) sur la pièce (2) à usiner, et
un support de pièce (4) pour les pièces à usiner (2),
**caractérisée en ce**
**que** le support de pièce (4) est déplaçable le long de deux axes principaux (X, Y) par rapport à l'unité d'usinage (6) au moyen d'un entraînement principal (8'),
**qu'**à son extrémité (6a) par rapport au support de pièce (4), l'unité d'usinage (6) est montée pivotante sur une unité de maintien (5') autour de deux axes supplémentaires (A, B) qui sont parallèles au plan des deux axes principaux (X, Y) et respectivement parallèles aux axes principaux (X, Y),
**qu'**un entraînement supplémentaire (7') pour dévier l'autre extrémité (6b) de l'unité d'usinage (6) par rapport au support de pièce (4) autour de l'axe supplémentaire respectif (A, B) est prévu pour chaque axe supplémentaire (A, B) sur l'unité de maintien (5') ou sur l'unité d'usinage (6), et
**qu'**une commande (9) est prévue, qui divise une trajectoire souhaitée du faisceau laser (3) sur la pièce (2) le long des deux axes principaux (X, Y) en un déplacement du support de pièce (4) le long des deux axes principaux (X, Y) et en une déviation de l'unité d'usinage (6) autour des deux axes supplémentaires (A, B) et pour commander de manière correspondante les entraînements principaux et supplémentaires (7', 8').

3. Machine d'usinage au laser selon l'une des revendications précédentes, **caractérisée en ce que** les deux entraînements supplémentaires (7, 7') de l'unité d'usinage (6) sont réalisés sous la forme d'entraînements linéaires pour la déviation en coordonnées cartésiennes ou sous la forme d'un entraînement linéaire et d'un entraînement rotatif pour la déviation en coordonnées polaires.

4. Machine d'usinage au laser selon l'une des revendications précédentes, **caractérisée en ce que** le faisceau laser (3) est injecté dans l'unité d'usinage (6) sous la forme d'un faisceau divergent et que l'unité d'usinage (6) présente une optique de reproduction (10), en particulier un dispositif télescopique, qui reproduit et en particulier focalise aussi le faisceau laser (3) injecté sur la pièce (2) à usiner.

5. Machine d'usinage au laser selon l'une des revendications précédentes, **caractérisée en ce que** le faisceau laser (3) est injecté dans l'unité d'usinage (6) par un câble conducteur de lumière (10) fixé à une extrémité à l'unité d'usinage (6).

6. Machine d'usinage au laser selon l'une des revendications précédentes, **caractérisée en ce qu'**un entraînement (7') pour déplacer l'unité d'usinage (6) entière par rapport à l'unité de déplacement (5) ou au dispositif de maintien (5') dans la direction du faisceau laser (3) sortant de l'unité d'usinage (6) est prévu sur l'unité de déplacement (5) ou sur le dispositif de maintien (5').

7. Machine d'usinage au laser selon l'une des revendications précédentes, **caractérisée en ce que** le faisceau laser (3) est injecté dans l'unité d'usinage (6) sous la forme d'un faisceau divergent par un câble conducteur de lumière (10) enfiché dans l'unité d'usinage (6).

8. Machine d'usinage au laser selon la revendication 7, **caractérisée en ce que** l'unité d'usinage (6) présente à son extrémité supérieure (6a) une prise de connecteur dans laquelle un connecteur de fibre (10a) du câble conducteur de lumière (10) est enfiché.

9. Machine d'usinage au laser selon la revendication 7 ou la revendication 8, **caractérisée en ce que** l'unité d'usinage (6) présente une optique de reproduction (11) qui reproduit et focalise le faisceau laser (3) injecté sur la pièce (2) à usiner.

10. Machine d'usinage au laser selon la revendication 9, **caractérisée en ce que** l'optique de reproduction (11) est constituée d'un système de lentilles comprenant une lentille de collimation (12) déplaçable dans la direction de propagation du faisceau, qui collimate le faisceau laser (3) émis du câble conducteur de lumière (10), et d'une lentille de focalisation (13) qui focalise le faisceau laser (3) sur la pièce (2).

11. Machine d'usinage au laser selon la revendication 10, **caractérisée en ce que** la position focale du faisceau laser (3) sur la pièce est variable par déplacement de la lentille de collimation (12) dans la direction de propagation du faisceau.

12. Procédé d'usinage au laser de pièces (2) au moyen de la machine d'usinage au laser (10) selon l'une des revendications précédentes, selon lequel une trajectoire souhaitée du faisceau laser (3) sur la pièce (2) le long des deux axes principaux (X, Y) est divisée en un déplacement de l'unité de déplacement (5) ou du support de pièce (4) le long des deux axes principaux (X, Y) et en une déviation de l'unité d'usinage (6) autour des deux axes supplémentaires (A, B) et les entraînements principaux et supplémentaires (7, 8 ; 7', 8') sont commandés de manière correspondante.
